# EUROPEAN PATENT APPLICATION

(11) **EP 4 804 395 A1**
(43) Date of publication of application: **09.09.2026**
(21) Application number: 25162376.5
(22) Date of filing: 07.03.2025
(51) Int. Cl.: H02M 1/42, H02M 7/06, H02P 6/10

(54) **POWER TOOL AND METHOD OF OPERATING THE SAME**

(71) Applicant: Husqvarna AB, 561 82 Huskvarna (SE)
(72) Inventor: Merkle, Martin, 89168 Niederstotzingen (DE)
(74) Representative: Finkele, Rolf

(57) **Abstract**

A power tool (**100**) and a method (**300**) for operating the same are provided. The power tool (**100**) includes an electric motor (**112**), an AC power supply (**102**) to provide an AC input voltage, and a rectifier (**104**) to convert the AC input voltage to a rectified DC voltage. The power tool (**100**) includes an inductor-capacitor (LC) circuit (**106**) to convert the rectified DC voltage to an output DC voltage, a pulse width modulated (PWM) switch (**108**) to control the output DC voltage, and a controller (**110**) to control the PWM switch (**108**). An internal inductor (**118**) of the electric motor (**112**) extends the LC circuit (**106**) to an inductor-capacitor-inductor (LCL) circuit (**122**). The controller (**110**) is configured to control a duty cycle of the PWM switch (**108**) such that an input current from the AC power supply (**102**) is sinusoidal and in-phase with the AC input voltage.

## Description

### TECHNICAL FIELD

The present disclosure relates to a power tool. More particularly, the present disclosure relates to the power tool and a method of operating the power tool.

### BACKGROUND

Electrical devices, such as, AC (corded) power devices, are commonly used in domestic and industrial applications, such as gardening. Such devices are generally operated at a constant power. Performance of such devices is affected by voltage and frequency fluctuations in power lines of mains power supply. Balancing electrical power between the mains supply and an electrical device is often used to improve mains power supply quality. For the same, the electric device typically uses a rectifier and a capacitor to convert a sinusoidal input voltage from the mains power supply to a quasi-constant DC voltage close to the sinusoidal peak voltage. Typically, a capacitor having a high capacitance value is necessary to temporarily buffer energy when the input voltage is lower, especially during sinusoidal zero crossing, to maintain a quasi-constant DC output voltage for the electrical device. Further, the capacitor can only be recharged when the input voltage is close to its peak value, hence above the capacitor voltage. Recharging the capacitor to again store the entire energy for a half-wave within this short period of time requires a high current peak. The current peaks may imitate as a heavy load on the mains power supply, especially as other devices with same architecture would recharge at exactly the same time. Therefore, attenuation of the current peaks is necessary. Different passive components may be used for attenuating the current peaks. The use of the passive filter components may not be sufficient and require an additional active power factor correction.

An example of a modified sinusoidal pulse width modulation for full digital power factor correction is provided in United States Patent Application US 2005/0270814 A1 (hereinafter referred to as '814 reference). A converter-controller includes a feedback circuit, a duty cycle modulator, a counter, and a comparator. The feedback circuit is configured to receive a feedback voltage from an output stage and to generate a current command signal. The duty cycle modulator is configured to generate a modified duty cycle utilizing the current command signal and a reference table. The counter is configured to produce a periodic signal, and the comparator is configured to generate a variable-duty-cycle output current corresponding to the difference of the periodic signal and the modified duty cycle.

### SUMMARY OF THE INVENTION

In view of the above, it is an objective of the present invention to solve or at least reduce the drawbacks discussed above. The objective is at least partially achieved by a power tool.

According to an aspect of the present invention, the power tool includes an electric motor, an alternating current (AC) power supply, and a rectifier. The AC power supply is configured to provide an AC input voltage. The rectifier is configured to convert the AC input voltage to a rectified pulsed direct current (DC) voltage. The power tool further includes an inductor to prevent any current peak and a capacitor at the rectifier output. The purpose of the capacitor is to ensure a low-resistance energy source for the electric motor. The capacitor may only be able to supply energy for significantly less than half a period of the input frequency. The inductor - capacitor (LC) circuit forms a low pass filter. The LC circuit is configured to convert the rectified DC voltage to an output DC voltage for the electric motor. The power tool further includes a pulse width modulated (PWM) switch and a controller. The PWM switch is configured to control the output DC voltage provided to the electric motor and the controller is configured to control the PWM switch. The power tool is characterized in that the LC circuit is extended to an inductor-capacitor-inductor (LCL) circuit by an internal inductor of the electric motor, and the controller is configured to control a duty cycle of the PWM switch such that an input current from the AC power supply is sinusoidal and in-phase with the AC input voltage.

The present disclosure provides an improved power tool that eliminates current peaks due to in-phase sinusoidal load modulation. Further, as the current peaks are eliminated, there is no requirement of active power correction. Remaining power fluctuations within a fraction of a pulse width modulation (PWM) period are suppressed by a filter formed by the LC circuit. The internal inductance of the motor extends the LC filter to the LCL circuit during an active phase of the PWM switch to further improve current filtering. The main purpose of the LCL circuit is to smoothen the high frequency current ripple from the PWM, as the electric motor is already driven by the PWM switch in such a way that the fundamental oscillation corresponds to a sinusoidal signal. Hence, there is no requirement of a high value DC link capacitor. According to an exemplary embodiment, a PWM frequency is higher than a frequency of the power supply. For instance, the PWM frequency is 10K Hertz (Hz) and the supply frequency is 50 Hz. Hence, the capacitor is configured to deliver energy for no longer than 100 microsecond at the PWM frequency as compared to the 10 millisecond at the supply frequency.

In addition, the internal inductor of the electric motor works as the largest electrical energy storage device and may limit an increase in the input current and a discharge of the capacitor. Furthermore, low torque fluctuations due to the sinusoidal motor activation are compensated by an inertia of the electric motor, thereby eliminating any deterioration in performance of the electric motor. Hence, the internal inductor and the inertia of the electric motor may allow control of the electric motor with pulsed power in such a way that a fundamental oscillation corresponds to the low-frequency mains voltage, without torque fluctuations being perceived at the electric motor output. Furthermore, as the input current and the AC input voltage are in-phase, the load may act as a resistive load, thereby minimizing the load to the AC power supply.

The term "electrically connected" according to the present disclosure may be defined as direct coupling between components and/or indirect coupling between components via one or more intervening electric components, such that an electric signal can be passed between the two components. As an example of indirect coupling, two components can be referred to as being electrically connected, even though they may have an intervening electric component between them which still allows an electric signal to pass from one component to the other component. Such intervening components may comprise, but are not limited to, wires, traces on a circuit board and/or another electrically conductive medium/component.

According to an exemplary embodiment of the invention, the AC power supply may be a mains supply and may provide the AC input voltage at a specific frequency.

According to an exemplary embodiment of the invention, the rectifier is a full-wave rectifier and includes a plurality of diodes for converting the AC input voltage into the rectified DC voltage.

According to an exemplary embodiment of the invention, the internal inductor of the electric motor enhances the LC circuit to the LCL circuit to limit an increase in current and a discharge of the capacitor, thereby reducing a peak load to the AC power supply.

According to an exemplary embodiment of the invention, the controller is configured to control the duty cycle of the PWM switch to compensate for a phase shift between the AC input voltage and the input current. In an embodiment, the duty cycle of the PWM switch varies within a half wave AC input voltage to counteract the phase shift between the AC input voltage and the input current. For instance, if the input current is ahead of the AC input voltage, then the PWM switch may be controlled to have a lower duty cycle at the beginning of the half-wave AC input voltage. In other words, the duty cycle of the PWM switch creates a resulting input current that follows the AC input voltage to suppress reactive power. Hence, an overall load to the AC power supply may be reduced.

According to an exemplary embodiment of the invention, the controller is configured to keep the duty cycle of the PWM switch as constant. Such control of the PWM switch may eliminate the requirement of active power factor correction, thereby making the power tool simple in design and may eliminate unnecessary power fluctuation.

According to an exemplary embodiment of the invention, the PWM switch is a field effect transistor (FET) or an insulated-gate bipolar transistor (IGBT). The FET and the IGBT may require low power consumption. Further, the FET as well as the IGBT has a fast switching time, hence the FET or the IGBT may be easily controlled without any time delay, thereby improving the overall performance and energy efficiency of the power tool.

According to an exemplary embodiment of the invention, the capacitor is a low value capacitor, and the LC circuit defines a low-pass filter. According to an embodiment, the low pass filter is configured to have a cut-off frequency. The cut-off frequency of the LC filter is in a range of or below the PWM frequency and higher than the low mains frequency. Hence, a value of the inductor and the capacitor are very small values. According to an exemplary embodiment of the invention, a capacitance of the capacitor may be in the range of 200 nano Farad (nF) to 700 nF. The low-pass filter may easily smooth-out current peaks generated due to modulation of the electric motor and may attenuate the current peaks to generate the sinusoidal input current.

According to an exemplary embodiment of the invention, the power tool may include an inductor electrically connected between the AC power supply and the rectifier. The inductor may be configured to reduce fluctuations in the input AC current.

According to a further aspect of the present invention, a method for operating a power tool is provided. The method includes receiving, by a rectifier, an AC input voltage from an AC power supply and converting, by the rectifier, the AC input voltage into a rectified DC voltage. The method further includes converting, by an inductor-capacitor (LC) circuit, the rectified DC voltage to an output DC voltage for an electric motor. The LC circuit includes an inductor and a capacitor. The method further includes controlling, by a pulse width modulated (PWM) switch, the output DC voltage provided to the electric motor, and controlling, by a controller, the PWM switch. The method is characterized in that an internal inductor of the electric motor extends the LC circuit to an inductor-capacitor-inductor LCL circuit during an active phase of the PWM switch. The method further includes controlling, by the controller, a duty cycle of the PWM switch such that an input current from the AC power supply is sinusoidal and in-phase with the AC input voltage.

The method may facilitate dynamic control of the duty cycle of the PWM switch using the controller to achieve the input current in-phase with the AC input voltage. Further, a filter formed by the LCL circuit eliminates high frequency current ripple and creates a sinusoidal input current. There is no requirement of a high value DC link capacitor. Furthermore, low torque fluctuations due to the sinusoidal motor activation are compensated by an inertia of the electric motor, thereby eliminating any deterioration in performance of the electric motor. Moreover, as the input current and the AC input voltage are in-phase, the load may act as a resistive load, thereby minimizing overall load to the AC power supply.

According to an exemplary embodiment of the invention, the internal inductor of the electric motor enhances the LC circuit to the LCL circuit to limit an increase in current and a discharge of the capacitor. Accordingly, a requirement of a high value DC link capacitor creating high current peaks is eliminated. Furthermore, low torque fluctuations due to the sinusoidal motor activation are compensate by the inertia of the electric motor, thereby eliminating any deterioration in performance of the electric motor.

According to an exemplary embodiment of the invention, the method further includes controlling, by the controller, the duty cycle of the PWM switch to compensate for a phase shift between the AC input voltage and the input current. The controlled duty cycle of the PWM switch may allow adjustment of a duty cycle of the input current, for instance, at the beginning of the half-wave AC input voltage to eliminate the phase shift.

According to an exemplary embodiment of the invention, the method further includes keeping, by the controller, the duty cycle of the PWM switch as constant. The control of the PWM switch may eliminate the requirement of active power factor correction, thereby making the power tool simple in design and may restrict unnecessary power fluctuation.

According to an exemplary embodiment of the invention, the capacitor is a low value capacitor, and the LCL circuit defines a low-pass filter. The low-pass filter may easily smooth-out current peaks generated due to modulation of the electric motor and may result in the sinusoidal input current.

Before discussing the invention with the help of the drawings, the invention will be briefly discussed in general. A power tool and a method for operating the same is provided, where to avoid high current peaks, an electric motor is not operated with a constant power (e.g. a constant torque in the electric motor) and is modulated synchronously with mains voltage using a pulse width modulated (PWM) switch. Hence, if an input voltage provides a high voltage, the electric motor is also operated at a high torque, and if the input voltage decreases, the torque of the electric motor is also reduced. Such behavior is achieved, for example, by omitting a large DC link capacitance and by controlling a pulse width modulation with constant a duty cycle. As a result, an input current, which is in phase with the input voltage, is generated. Therefore, no active power factor correction circuit is required. Higher frequency current peaks that arise from the modulation of the electric motor are easily smoothed out with small passive filter components. Resulting power fluctuations within a cycle are usually suppressed by an inertia of the electric motor without having any negative effect on the performance of the power tool. Unwanted phase shifts between the input voltage and the input current due to filters or the electric motor can also be compensated in a similar way. In case of unwanted phase shifts, the duty cycle of the PWM switch is not constant but varies within a half period to counteract the phase shifts. If, for example, an inductor-capacitor (LC) circuit causes the input current to be out of phase with the input voltage, a modulation of the PWM switch is performed to control the phase of the input current.

The power tool and the method according to the present invention may eliminate the requirement of active power factor correction by a dynamic control over switching of the electric motor using the PWM switch. Further, the dynamic control of the PWM switch may facilitate operation of the electric motor such that a sinusoidal input current from an AC supply is generated that is in-phase with an AC input voltage. Moreover, as the input current and the AC input voltage are in-phase, the load may act as a resistive load to the power supply, and hence, an overall load to the power supply may be reduced. Further, an inductor-capacitor (LC) circuit is configured to smooth-out high frequency current peaks generated by controlled switching of the electric motor. Hence, there may be no requirement of a high values DC link capacitor. The power tool and the method according to the present invention may use an internal inductor of the electric motor to extend the LC circuit to an inductor-capacitor-inductor (LCL) circuit. The internal inductor may work as a primary electrical energy storage and is configured to limit a current increase and a capacitor discharge. The LCL circuit may define a low-pass filter having a low value capacitor. Hence, the smoothening of the input current may be performed by the inductor of the LC circuit as well as the internal inductor of the electric motor.

According to an exemplary embodiment of the invention, the power tool and the method may provide the LCL circuit to convert a DC rectified voltage into an output DC voltage in which the internal inductor of the electric motor extends the LC circuit to the LCL circuit. According to an exemplary embodiment of the invention, the power tool and the method may provide in which the internal inductor is configured to limit the current increase and the capacitor discharge rate. Hence, the internal inductor and the inertia of the electric motor may allow control of the electric motor with pulsed power in such a way that the fundamental oscillation corresponds to the low-frequency mains voltage, without torque fluctuations being perceived at the electric motor output. According to an exemplary embodiment of the invention, the power tool and the method may provide a dynamic control of the PWM switch using the controller. According to an exemplary embodiment of the invention, the power tool and the method that may generate sinusoidal input current and controls the PWM switch to control the phase shift of the input current.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a schematic view of a power tool, in accordance with an exemplary embodiment of the present disclosure;
**FIG. 2** illustrates a detailed schematic view of the power tool, in accordance with an exemplary embodiment of the present disclosure;
**FIG. 3** illustrates a graph depicting different plots, in accordance with an embodiment of the present disclosure; and
**FIG. 4** illustrates a flowchart of a method for operating the power tool, in accordance with an embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

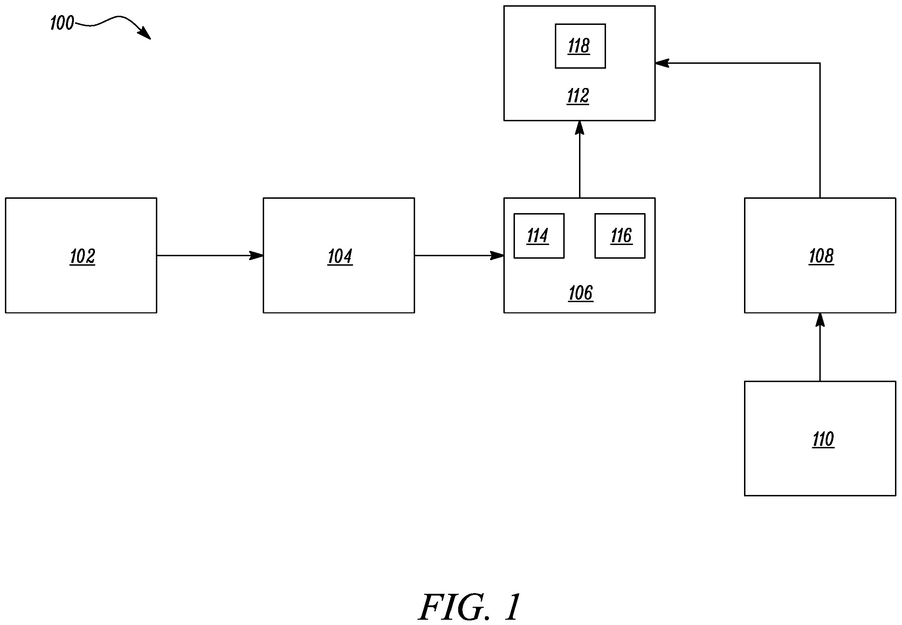

**FIG. 1** illustrates a schematic view of a power tool **100** in accordance with the present disclosure. The power tool **100** is configured to be connected to AC mains to supply power to different loads. The power tool **100** includes an alternating current (AC) power supply **102** configured to provide an AC input voltage. The power tool **100** further includes an electric motor **112.** The electric motor **112** may be configured to operate at a constant power or variable power.

The power tool **100** further includes a rectifier **104** configured to convert the AC input voltage to a rectified direct current (DC) voltage. The power tool **100** further includes an inductor-capacitor (LC) circuit **106** electrically connected to the rectifier **104.** The LC circuit **106** includes an inductor **116** and a capacitor **114** and configured to convert the rectified DC voltage to an output DC voltage for the electric motor **112.** The electric motor **112** has an internal inductor **118.**

The power tool **100** further includes a pulse width modulated (PWM) switch **108** configured to control the output DC voltage provided to the electric motor **112.** The PWM switch **108** is a field effect transistor (FET) or an insulated-gate bipolar transistor (IGBT).

The power tool **100** further includes a controller **110** configured to control the PWM switch **108.** Further, the controller **110** is configured to control a duty cycle of the PWM switch **108** such that an input current from the AC power supply **102** is sinusoidal and in-phase with the AC input voltage. In an embodiment, the controller **110** is configured to control the duty cycle of the PWM switch **108** to compensate for a phase shift between the AC input voltage and the input current. In another embodiment, the controller **110** is configured to keep the duty cycle of the PWM switch **108** as constant.

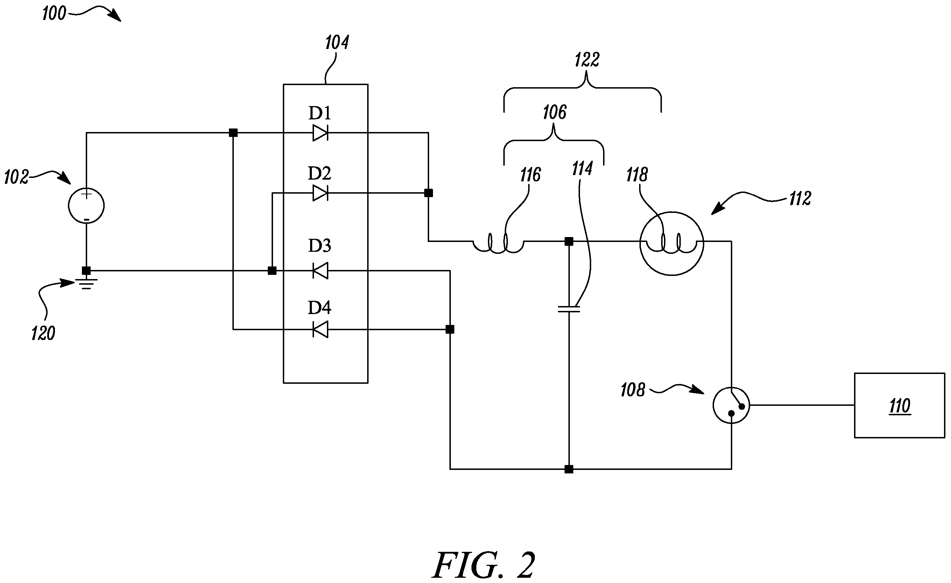

**FIG. 2** illustrates a detailed schematic view of the power tool **100** in accordance with the present disclosure. The power tool **100** is configured to drive the electric motor **112.** The power tool **100** includes the rectifier **104,** the LC circuit **106,** the PWM switch **108,** and the controller **110.**

According to an exemplary embodiment of the invention, the rectifier **104** includes a plurality of diodes **D1, D2, D3, D4** arranged in a way so as to form a full-wave rectifier and is configured to reproduce the rectified DC voltage from the AC input voltage.

According to an exemplary embodiment of the invention, the LC circuit **106** is extended to an inductor-capacitor-inductor circuit LCL circuit **122** by the internal inductor **118** of the electrical motor **112.** In other words, the internal inductor **118** of the electric motor **112** extends the LC circuit **106** to form the LCL circuit **122.** The capacitor **116** of the LCL circuit **122** is a low value capacitor. The LCL circuit **122** defines a low-pass filter. The internal inductor **118** may work as a primary electrical energy storage. The internal inductor **118** is configured to limit a current increase and a capacitor discharge. Hence, the internal inductor **118** and the inertia of the electric motor **112** may allow control of the electric motor **112** with pulsed power in such a way that the fundamental oscillation corresponds to the low-frequency mains voltage, without torque fluctuations being perceived at an output of the electric motor **112.**

According to an exemplary embodiment of the invention, the power tool **100** includes an electrical ground **120** for providing an electrical connection between the AC power supply **102,** the rectifier **104,** the LC circuit **106,** and the PWM switch **108.**

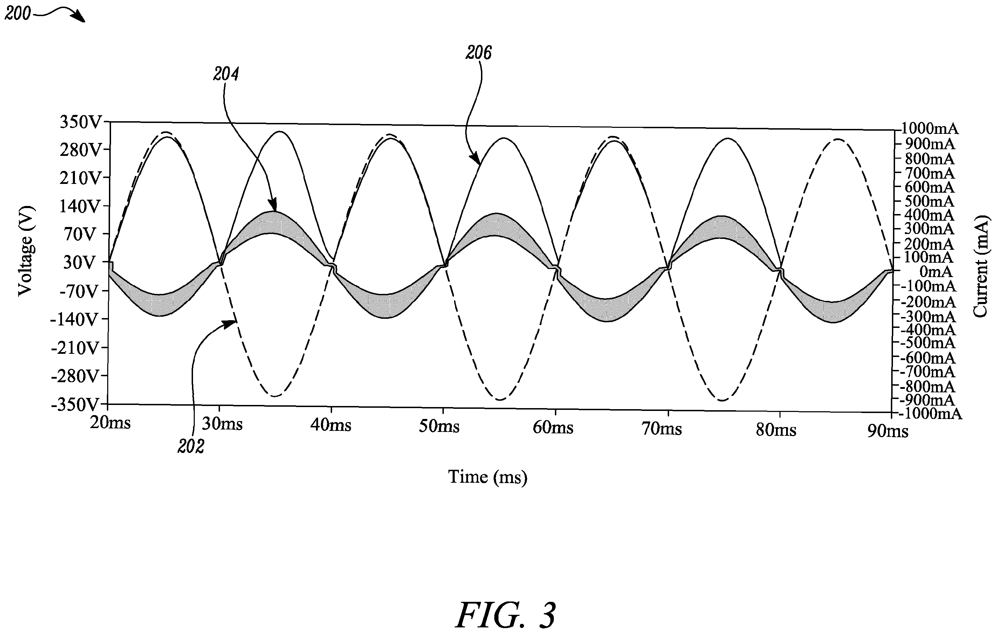

**FIG. 3** illustrates a graph **200** depicting different plots, in accordance with an embodiment of the present disclosure. The graph **200** includes a plot **202** depicting an AC input voltage from the AC power supply **102,** a plot **204** depicting an input current from the AC power supply **102,** and a plot **206** depicting a rectified DC voltage from the rectifier **104.** It is to be noted that the plot **204** of the input current is sinusoidal. The sinusoidal characteristic of the input current is achieved due to controlled switching of the electric motor **112** and a low value of the capacitor **114** resulting in the pulsed DC voltage.

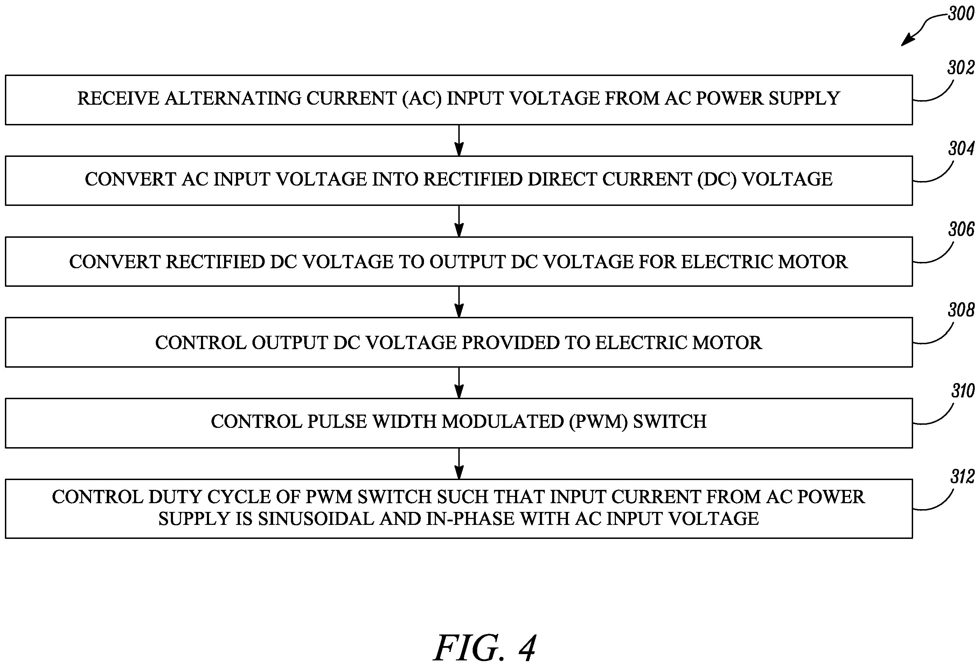

**FIG. 4** illustrates a flowchart of a method **300** for operating the power tool **100,** in accordance with an embodiment of the present disclosure. The method **300** includes a step **302** of receiving an alternating current (AC) input voltage from an AC power supply **102.** The method **300** includes a step **304** of converting, by the rectifier **104,** the AC input voltage into a rectified direct current (DC) voltage. The method **300** includes a step **306** of converting, by an inductor-capacitor (LC) circuit **106,** the rectified DC voltage to an output DC voltage for an electric motor **112.** The LC circuit **106** includes an inductor **116** and a capacitor **114.** The capacitor **114** is a low value capacitor. An internal inductor **118** of the electric motor **112** extends the LC circuit **106** to an inductor-capacitor-inductor LCL circuit **122.** The capacitor **114** is a low value capacitor, and the LCL circuit **122** defines a low-pass filter.

The method **300** includes a step **308** of controlling, by a pulse width modulated (PWM) switch **108,** the output DC voltage provided to the electric motor **112.** The PWM switch **108** is connected between the electric motor **112** and the electric ground **120.** The method **300** includes a step **310** of controlling, by the controller **110,** the PWM switch **108.** The method **300** includes a step **312** of controlling, by the controller **110,** a duty cycle of the PWM switch **108** such that an input current from the AC power supply **102** is sinusoidal and in-phase with the AC input voltage. The internal inductor **118** of the electric motor **112** extends the LC circuit **106** to the LCL circuit **122** during an active phase of the PWM switch **108.**

The method **300** further includes a step (not shown) of controlling, by the controller **110,** the duty cycle of the PWM switch **108** to compensate for the phase shift between the AC input voltage and the input current. The method **300** further includes a step (not shown) of keeping, by the controller **110,** the duty cycle of the PWM switch **108** as constant.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Power Tool
- **102**: AC Power Supply
- **104**: Rectifier
- **106**: Inductor-Capacitor Circuit
- **108**: Pulse Width Modulated (PWM) Switch
- **110**: Controller
- **112**: Electric Motor
- **114**: Capacitor
- **116**: Inductor
- **118**: Internal Inductor
- **120**: Electrical Ground
- **122**: Inductor-Capacitor-Inductor Circuit
- **200**: Graph
- **202**: Plot
- **204**: Plot
- **206**: Plot
- **300**: Method
- **302**: Step
- **304**: Step
- **306**: Step
- **308**: Step
- **310**: Step
- **312**: Step
- **D1**: Diode
- **D2**: Diode
- **D3**: Diode
- **D4**: Diode

## Claims

1. A power tool **(100)** comprising:
an electric motor **(112);**
an alternating current (AC) power supply **(102)** configured to provide an AC input voltage;
a rectifier **(104)** configured to convert the AC input voltage to a rectified direct current (DC) voltage;
an inductor-capacitor (LC) circuit **(106)** electrically connected to the rectifier **(104),** the LC circuit **(106)** comprising an inductor **(116)** and a capacitor **(114)** and configured to convert the rectified DC voltage to an output DC voltage for the electric motor **(112);**
a pulse width modulated (PWM) switch **(108)** configured to control the output DC voltage provided to the electric motor **(112);** and
a controller **(110)** configured to control the PWM switch **(108);**
**characterized in that:**
the LC circuit **(106)** is extended to an inductor-capacitor-inductor (LCL) circuit **(122)** by an internal inductor **(118)** of the electric motor **(112);** and
the controller **(110)** is configured to control a duty cycle of the PWM switch **(108)** such that an input current from the AC power supply **(102)** is sinusoidal and in-phase with the AC input voltage.

2. The power tool **(100)** of claim 1, wherein the controller **(110)** is configured to control the duty cycle of the PWM switch **(108)** to compensate for a phase shift between the AC input voltage and the input current.

3. The power tool **(100)** of any one of the preceding claims, wherein the controller **(110)** is configured to keep the duty cycle of the PWM switch **(108)** as constant.

4. The power tool **(100)** of any one of the preceding claims, wherein the PWM switch **(108)** is a field effect transistor (FET) or an insulated-gate bipolar transistor (IGBT).

5. The power tool **(100)** of any of the preceding claims, wherein the capacitor **(114)** of the LCL circuit **(122)** is a low value capacitor, and wherein the LCL circuit **(122)** defines a low-pass filter.

6. A method **(300)** for operating a power tool **(100),** the method **(300)** comprising:
receiving **(302),** by a rectifier **(104),** an AC input voltage from an AC power supply **(102);**
converting **(304),** by the rectifier **(104),** the AC input voltage into a rectified DC voltage;
converting **(306),** by an inductor-capacitor (LC) circuit **(106),** the rectified DC voltage to an output DC voltage for an electric motor **(112),** the LC circuit **(106)** comprising an inductor **(116)** and a capacitor **(114);**
controlling **(308),** by a pulse width modulated (PWM) switch **(108),** the output DC voltage provided to the electric motor **(112);** and
controlling **(310),** by a controller **(110),** the PWM switch **(108);**
**characterized in that**
an internal inductor **(118)** of the electric motor **(112)** extends the LC circuit **(106)** to an inductor-capacitor-inductor (LCL) circuit **(122)** during an active phase of the PWM switch **(108);** and
wherein the method **(300)** further comprises controlling **(312),** by the controller **(110),** a duty cycle of the PWM switch **(108)** such that an input current from the AC power supply **(102)** is sinusoidal and in-phase with the AC input voltage.

7. The method **(300)** of claim 6, further comprising controlling, by the controller **(110),** the duty cycle of the PWM switch **(108)** to compensate for a phase shift between the AC input voltage and the input current.

8. The method **(300)** of any one of claims 6 or 7, further comprising keeping, by the controller **(110),** the duty cycle of the PWM switch **(108)** as constant.

9. The method **(300)** of any of claims 6 - 8, wherein the capacitor **(114)** is a low value capacitor, and wherein the LCL circuit **(122)** defines a low-pass filter.

## Amended claims

### Amended claims in accordance with Rule 137(2) EPC.

1. A power tool **(100)** comprising:
an electric motor **(112);**
an alternating current (AC) power supply **(102)** configured to provide an AC input voltage;
a rectifier **(104)** configured to convert the AC input voltage to a rectified direct current (DC) voltage;
an inductor-capacitor (LC) circuit **(106)** electrically connected to the rectifier **(104);**
a pulse width modulated (PWM) switch **(108)** configured to control the output DC voltage provided to the electric motor **(112);** and
a controller **(110)** configured to control the PWM switch **(108);**
**characterized in that:**
the LC circuit **(106)** comprising an inductor **(116)** and a capacitor **(114)** and configured to convert the rectified DC voltage to an output DC voltage for the electric motor **(112),**
the LC circuit **(106)** is extended to an inductor-capacitor-inductor (LCL) circuit **(122)** by an internal inductor **(118)** of the electric motor **(112);** and
the controller **(110)** is configured to control a duty cycle of the PWM switch **(108)** such that an input current from the AC power supply **(102)** is sinusoidal and in-phase with the AC input voltage.

2. The power tool **(100)** of claim 1, wherein the controller **(110)** is configured to control the duty cycle of the PWM switch **(108)** to compensate for a phase shift between the AC input voltage and the input current.

3. The power tool **(100)** of any one of the preceding claims, wherein the controller **(110)** is configured to keep the duty cycle of the PWM switch **(108)** as constant.

4. The power tool **(100)** of any one of the preceding claims, wherein the PWM switch **(108)** is a field effect transistor (FET) or an insulated-gate bipolar transistor (IGBT).

5. The power tool **(100)** of any of the preceding claims, wherein the capacitor **(114)** of the LCL circuit **(122)** is a low value capacitor, and wherein the LCL circuit **(122)** defines a low-pass filter.

6. A method **(300)** for operating a power tool **(100),** the method **(300)** comprising:
receiving **(302),** by a rectifier **(104),** an AC input voltage from an AC power supply **(102);**
converting **(304),** by the rectifier **(104),** the AC input voltage into a rectified DC voltage;
controlling **(308),** by a pulse width modulated (PWM) switch **(108),** the output DC voltage provided to the electric motor **(112);** and
controlling **(310),** by a controller **(110),** the PWM switch **(108);**
**characterized in that**
converting **(306),** by an inductor-capacitor (LC) circuit **(106),** the rectified DC voltage to an output DC voltage for an electric motor **(112),** the LC circuit **(106)** comprising an inductor **(116)** and a capacitor **(114);an** internal inductor **(118)** of the electric motor **(112)** extends the LC circuit **(106)** to an inductor-capacitor-inductor (LCL) circuit **(122)** during an active phase of the PWM switch **(108);** and
wherein the method **(300)** further comprises controlling **(312),** by the controller **(110),** a duty cycle of the PWM switch **(108)** such that an input current from the AC power supply **(102)** is sinusoidal and in-phase with the AC input voltage.

7. The method **(300)** of claim 6, further comprising controlling, by the controller **(110),** the duty cycle of the PWM switch **(108)** to compensate for a phase shift between the AC input voltage and the input current.

8. The method **(300)** of any one of claims 6 or 7, further comprising keeping, by the controller **(110),** the duty cycle of the PWM switch **(108)** as constant.

9. The method **(300)** of any of claims 6 - 8, wherein the capacitor **(114)** is a low value capacitor, and wherein the LCL circuit **(122)** defines a low-pass filter.
